(19) Europäisches Patentamt / European Patent Office / Office européen des brevets

(11) **EP 4 617 041 A1**

(12) **EUROPEAN PATENT APPLICATION**
published in accordance with Art. 153(4) EPC

(43) Date of publication:
17.09.2025 Bulletin 2025/38

(21) Application number: 23930722.6

(22) Date of filing: 12.07.2023

(51) International Patent Classification (IPC):
*B29C 53/04* (2006.01)     *B29C 43/34* (2006.01)
*B29C 43/36* (2006.01)     *B29C 70/42* (2006.01)

(52) Cooperative Patent Classification (CPC):
B29C 33/38; B29C 43/34; B29C 43/36;
B29C 53/04; B29C 70/42

(86) International application number:
PCT/JP2023/025717

(87) International publication number:
WO 2024/202090 (03.10.2024 Gazette 2024/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.03.2023 JP 2023053259

(71) Applicant: **Mitsubishi Heavy Industries, Ltd.**
**Tokyo 100-8332 (JP)**

(72) Inventor: **TANEICHI, Jumpei**
**Tokyo 100-8332 (JP)**

(74) Representative: **Studio Torta S.p.A.**
**Via Viotti, 9**
**10121 Torino (IT)**

(54) **SHAPING DEVICE AND SHAPING METHOD**

(57)     Provided is shaping device (100) for bending a laminate (200) of a fiber-reinforced sheet at two intersecting folding lines (201), wherein: the shaping device (100) comprises a pressing mechanism (110) having two pressing plates (111) and shaping plates (121) are capable of approaching and separating from each other in the height direction (Dh) intersecting the laminate (200); the pressing plates (111) of the pressing mechanism (110) have pressing contact part (111a) that contacts the surface of the laminate (200) along the folding line (201) and a pressing surface (111b) that has an in-plane direction substantially perpendicular to the laminate (200); the shaping plates (121) of the shaping mechanism (120) have a shaping contact part (121a) that contacts the rear surface of the laminate (200) and shaping surface (121b) that faces the pressing surface (111b).

FIG. 1

**Description**

Technical Field

The present disclosure relates to a forming device and a forming method.

Background Art

As a method for folding a composite material with two folding lines intersecting each other, for example, there is a method described in PTL 1.

Citation List

Patent Literature

[PTL 1] U.S. Patent No. 9,718,262

Summary of Invention

Technical Problem

However, in a case where the composite material is folded around different axes, the bending step is divided into a plurality of steps, which may lead to an increase in cost or time required for processing.
The present disclosure has been made in view of such circumstances, and an object of the present disclosure is to provide a forming device and a forming method capable of forming a laminate of fiber-reinforced sheets into a forming article having two folding parts intersecting each other and three surfaces at once.

Solution to Problem

In order to solve the above problems, a forming device and a forming method of the present disclosure adopt the following means.
A forming device according to an aspect of the present disclosure is a forming device for folding a laminate of fiber-reinforced sheets along two folding lines intersecting each other, the forming device including a pressing mechanism having two pressing plates, and a forming mechanism having two forming plates, in which the pressing plate and the forming plate are capable of being brought close to and separated from each other in a first direction intersecting the laminate, the pressing plate of the pressing mechanism has a pressing contact part that comes into contact with a front surface of the laminate along the folding line and a pressing surface in which a direction substantially perpendicular to the laminate is an in-plane direction, and the forming plate of the forming mechanism has a forming contact part that comes into contact with a back surface of the laminate and a forming surface facing the pressing surface.
A forming method according to an aspect of the present disclosure is a forming method including bonding interlayers of a predetermined portion of the laminate placed on the support surface, placing the predetermined portion of the laminate, of which the interlayers are bonded, on the support surface of the support plate disposed between the pressing plate and the forming plate in the first direction, and bringing the pressing plate and the forming plate close to each other in the first direction.

Advantageous Effects of Invention

According to the present disclosure, the laminate of the fiber-reinforced sheets can be formed into a forming article having two folding parts intersecting each other and three surfaces at once.

Brief Description of Drawings

Fig. 1 is a perspective view of a forming device and a laminate according to an embodiment of the present disclosure (initial state).
Fig. 2 is a perspective view of the laminate.
Fig. 3 is a perspective view of a forming article.

Fig. 4 is a perspective view of the forming device according to the embodiment of the present disclosure (initial state).

Fig. 5 is a perspective view of a pressing mechanism and the laminate (initial state).

Fig. 6 is a perspective view of the forming device and the laminate according to the embodiment of the present disclosure (during forming).

Fig. 7 is a perspective view of the forming device and the laminate according to the embodiment of the present disclosure (during forming).

Fig. 8 is a view of a pressing plate, a forming plate, and the laminate as viewed in a direction of an arrow A shown in Fig. 7 (during forming).

Fig. 9 is a view showing a state where the pressing plate and the forming plate are further brought close to each other in the height direction from the state of Fig. 8 (during forming).

Description of Embodiments

Hereinafter, an embodiment of the present disclosure will be described with reference to the drawings.

<Regarding Object of Forming>

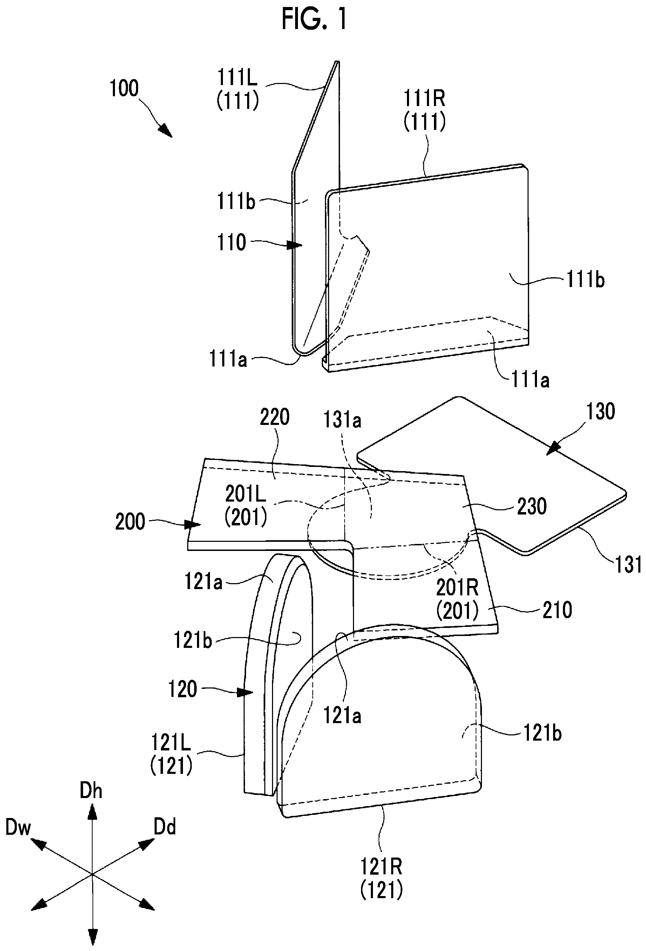

As shown in Fig. 1, the forming device 100 is a device for forming a laminate 200 having a predetermined shape by laminating a plurality of sheet materials (fiber-reinforced sheets) including reinforcing fibers, and for manufacturing a forming article 300 having a predetermined shape.

The sheet material constituting the laminate 200 is a sheet-like intermediate molding material in which the interlayers of the reinforcing fibers are bonded to each other and partially integrated.

The reinforcing fibers included in the composite materials are, for example, carbon fibers, glass fibers, aramid fibers, or the like. As the matrix resin included in the composite material, a thermosetting resin can be used, and examples thereof include an epoxy resin, an unsaturated polyester, a vinyl ester, a phenol, a cyanate ester, and a polyimide.

A thermoplastic resin can also be used as the matrix resin. In this case, the laminate 200 as the intermediate molding material is obtained by using, for example, a thermoplastic resin in a powder form as a binder to bond the interlayers of the reinforcing fibers which are dry materials to each other.

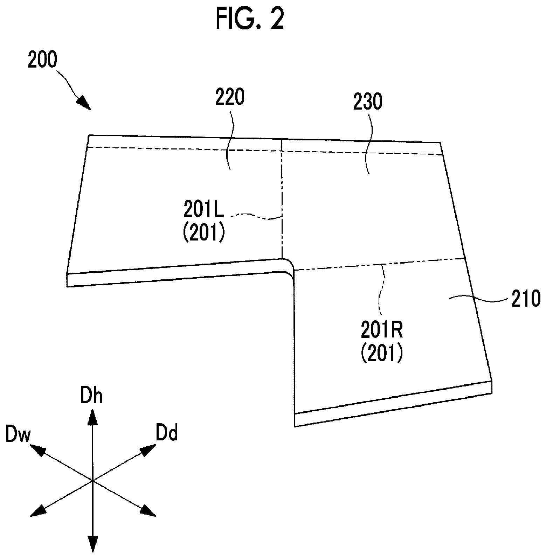

The laminate 200 having a predetermined shape is, for example, a single sheet of substantially L-shaped material having two different folding lines 201 (201L, 201R) and three substantially rectangular portions 210, 220, and 230 as shown in Fig. 2.

In the laminate 200, a boundary line between the central portion 230 and the extending portion 210 is a folding line 201R, and a boundary line between the central portion 230 and the extending portion 220 is a folding line 201L. At this time, the folding line 201L and the folding line 201R intersect with each other.

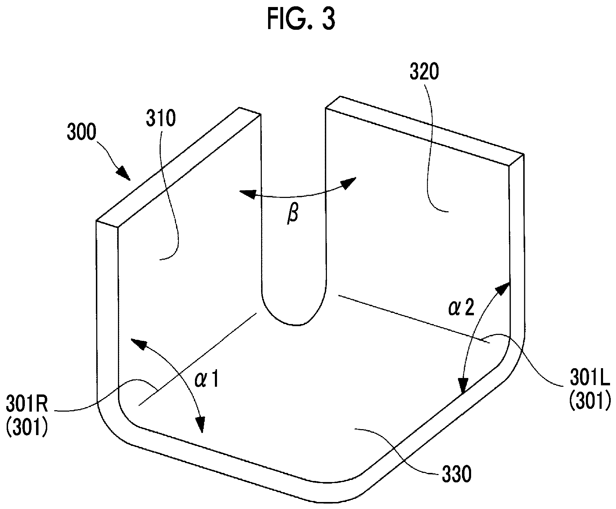

The forming article 300 having a predetermined shape is, for example, a component having two different folding parts 301 (301L, 301R) and three substantially rectangular surfaces 310, 320, and 330 in which normal directions intersect with each other, and each of which has a side of approximately 10 cm, as shown in Fig. 3.

In the forming article 300, a boundary portion between the surface 330 and the surface 310 is a folding part 301R, and a boundary portion between the surface 330 and the surface 320 is a folding part 301L. At this time, the folding parts 301L and 301R intersect with each other.

Here, an angle formed by the surface 330 and the surface 310 is defined as an angle $\alpha1$, an angle formed by the surface 330 and the surface 320 is defined as an angle $\alpha2$, and an angle formed by the surface 310 and the surface 320 is defined as an angle $\beta$.

The folding part 301R of the forming article 300 is a curved portion formed by folding the extending portion 210 along the folding line 201R with respect to the central portion 230 of the laminate 200.

The folding part 301L of the forming article 300 is a curved portion formed by folding the extending portion 220 along the folding line 201L with respect to the central portion 230 of the laminate 200.

<Regarding Forming Device>

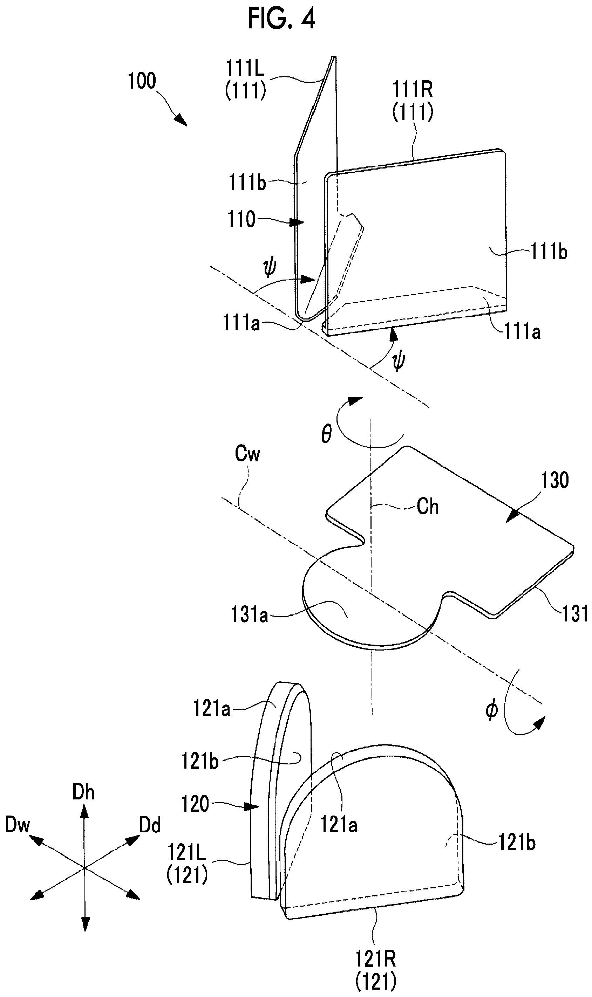

As shown in Fig. 4, the forming device 100 includes a pressing mechanism 110, a forming mechanism 120, and a support mechanism 130.

The forming device 100 is disposed in a system defined by three directions, for example, a height direction Dh (first direction) along an up-down direction, a depth direction Dd (second direction) substantially perpendicular to the height direction Dh, and a width direction Dw (third direction) substantially perpendicular to the height direction Dh and the depth direction Dd, in Fig. 4.

As shown in Fig. 1, the laminate 200 before the forming and in a state before the positions and angles ($\psi$, $\varphi$, and $\theta$ to be described later) of each mechanism are adjusted (hereinafter, also referred to as an "initial state") extends in an in-plane (in a horizontal plane) defined by the depth direction Dd and the width direction Dw. That is, the laminate 200 in the initial state is substantially perpendicular to the height direction Dh.

The three directions are defined for the description of the forming device 100, and do not limit the actual posture of the forming device 100 or the laminate 200.

The pressing mechanism 110, the forming mechanism 120, and the support mechanism 130 are disposed along the height direction Dh and are capable of being brought close to and separated from each other along the height direction Dh.

The pressing mechanism 110 includes two pressing plates 111 (111L, 111R).

The pressing plate 111 is a plate-shaped member in which a lower side is a pressing contact part 111a and a surface facing outward in the width direction Dw is a pressing surface 111b.

The pressing contact part 111a is a portion that comes into contact with the front surface of the laminate 200 along the folding line 201 when the laminate 200 is formed.

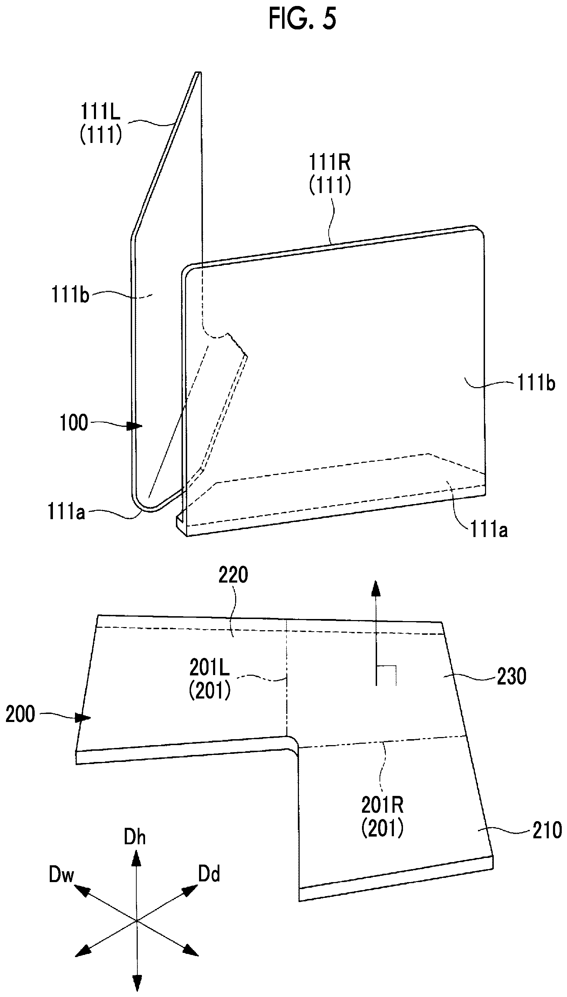

The pressing surface 111b is a portion that comes into contact with the front surface of the extending portion 210 and the front surface of the extending portion 220 when the laminate 200 is formed. The front surface of the extending portion 210 and the front surface of the extending portion 220 are surfaces facing inward after the forming. As shown in Fig. 5, the in-plane direction of the pressing surface 111b substantially coincides with a direction (a normal direction of the laminate 200) substantially perpendicular to the laminate 200 in the initial state.

As shown in Fig. 4, the pressing plate 111 is disposed in a substantially V shape as viewed in the height direction Dh (as viewed in a plan view). That is, the two pressing contact parts 111a and the two pressing surfaces 111b are also disposed in a substantially V shape, respectively.

At this time, an angle formed by a straight line along the width direction Dw and each of the pressing plates 111 (each of the pressing surfaces 111b) is defined as an angle $\psi$. The angle $\psi$ can be appropriately adjusted. That is, the angle formed by the pressing surfaces 111b of the two pressing plates 111 disposed in a substantially V shape can be appropriately adjusted.

As the two pressing plates 111 are viewed from the height direction Dh, the depth direction Dd passes through the middle of the two pressing plates 111.

The forming mechanism 120 includes two forming plates 121 (121L and 121R).

The forming plate 121 is a plate-shaped member in which an upper side is a forming contact part 121a and a surface facing inward in the width direction Dw is a forming surface 121b.

The forming contact part 121a is a portion that comes into contact with the back surface of the laminate 200 when the laminate 200 is formed. The forming contact part 121a smoothly protrudes toward the pressing plate 111 side installed above. In the case of Fig. 4, the forming contact part 121a has an upward protruding arc shape.

The forming surface 121b is a portion that comes into contact with the back surface of the extending portion 210 and the back surface of the extending portion 220 when the laminate 200 is formed. The back surface of the extending portion 210 and the back surface of the extending portion 220 are surfaces facing outward after the forming.

The forming plate 121 is disposed in a substantially V shape as viewed in the height direction Dh (as viewed in a plan view). That is, the two forming contact parts 121a and the two forming surfaces 121b are also disposed in a substantially V shape, respectively.

As the forming plate 121 is viewed from the height direction Dh, the forming surface 121b is disposed to be substantially parallel to the pressing surface 111b of the pressing plate 111 with a predetermined gap. That is, when the pressing plate 111 and the forming plate 121 are close to each other, the forming surface 121b faces the pressing surface 111b with a predetermined gap therebetween in a substantially parallel manner. Specifically, the forming surface 121b of the forming plate 121L faces the pressing surface 111b of the pressing plate 111L, and the forming surface 121b of the forming plate 121R faces the pressing surface 111b of the pressing plate 111R.

Since the angle formed by the two pressing plates 111 is appropriately adjusted, the angle of the forming plate 121 may be adjusted accordingly.

The support mechanism 130 has a support plate 131.

The support plate 131 is a plate-shaped member that extends in a plane defined by the width direction Dw and the depth direction Dd.

The support plate 131 has a support surface 131a that is disposed between the two pressing plates 111 disposed in a substantially V shape as viewed in the height direction Dh (as viewed in a plan view) and that faces upward.

The laminate 200 is placed on the support surface 131a. Specifically, the central portion 230 of the laminate 200 is mainly placed on the support surface 131a.

An edge of the support surface 131a facing the two pressing plates 111 is formed in a substantially arc shape (substantially circular shape).

The support plate 131 is rotatable around an axis Cw that is substantially perpendicular to the axis Ch and that extends in an in-plane direction of the support plate 131. In the present embodiment, as shown in Fig. 4, the axis Cw extends along the width direction Dw. At this time, the rotation angle of the support plate 131 around the axis Cw is defined as an angle φ (the angle of depression from the horizontal plane is positive). The axis Cw is not limited to a case where the axis Cw coincides with the width direction Dw, and may be inclined with respect to the width direction Dw. That is, the axis Cw is defined in the plane of the support plate 131, and the angle φ around the axis Cw is a coordinate system fixed to the support plate 131. In contrast, the angle θ around the axis Ch is a coordinate system fixed to the outside.

The support plate 131 is rotatable around the axis Ch along the height direction Dh. The axis Ch passes through a substantially center of an arc (circle) drawn by the edge of the support surface 131a. At this time, the rotation angle of the support plate 131 (support surface 131a) around the axis Ch is defined as an angle θ (counterclockwise is positive).

The position of the support plate 131 along the depth direction Dd is adjustable.

<Regarding Forming Method>

As shown in Fig. 1, the pressing mechanism 110 (a set of two pressing plates 111), the forming mechanism 120 (a set of two forming plates 121), and the support mechanism 130 (the support plate 131) of the forming device 100 are disposed to be separated from each other at a constant distance in the height direction Dh.

Next, the laminate 200 is placed on the support plate 131 of the forming device 100.

Specifically, the central portion 230 of the laminate 200 is positioned on the support surface 131a of the support plate 131, and the laminate 200 is placed on the support mechanism 130 so that the extending portion 210 of the laminate 200 faces the forming plate 121R of the forming mechanism 120 and the extending portion 220 of the laminate 200 faces the forming plate 121L of the forming mechanism 120 in a plan view.

At this time, in order to stably place the central portion 230 on the support surface 131a, it is preferable to bond the interlayers of the central portion 230 in advance. Instead of the interlayer bonding, the central portion 230 may be sandwiched between the support surface 131a and another component (not shown).

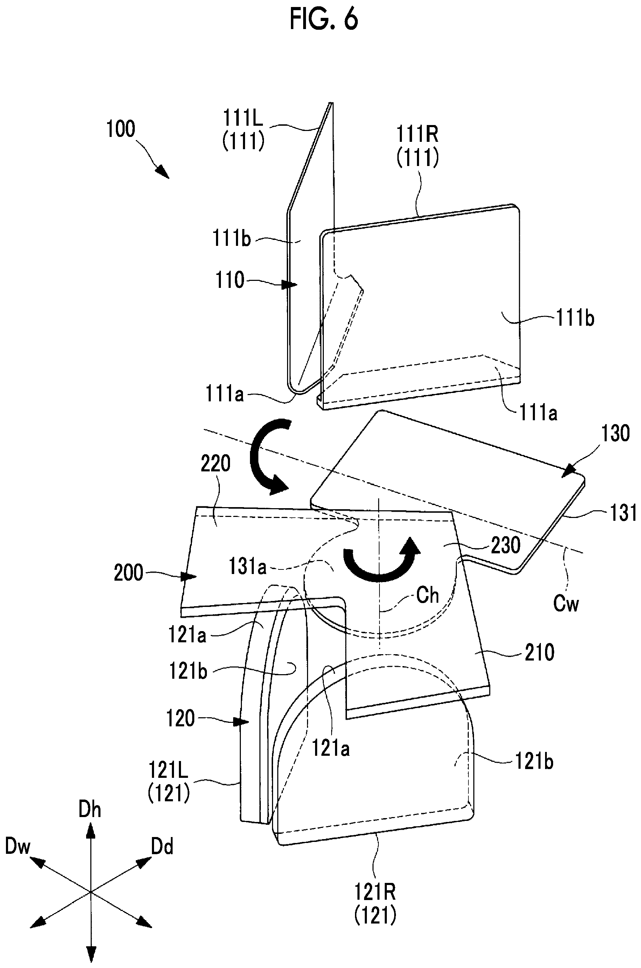

Next, as shown in Fig. 6, the support plate 131 on which the laminate 200 is placed is rotated around the axis Cw and/or the axis Ch as necessary (that is, the angle φ and/or the angle θ is adjusted as necessary). The posture of the laminate 200 placed on the support plate 131 also changes with the rotation of the support plate 131.

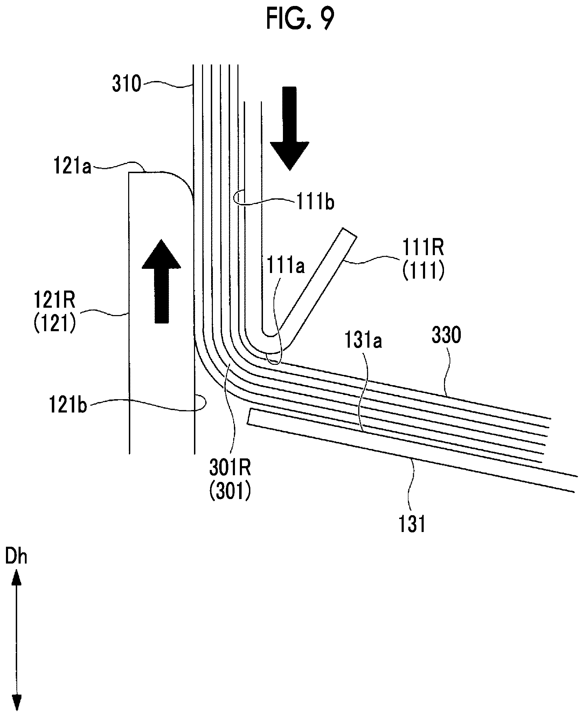

At this time, since the edge of the support surface 131a has a substantially arc shape, even in a case where the support plate 131 is rotated around the axis Ch, the edge of the support surface 131a does not interfere with each forming plate 121 in a subsequent step (refer to Fig. 9).

Since the position of the support plate 131 along the depth direction Dd is adjustable, even in a case where the support plate 131 is rotated around the axis Cw, the center of the support surface 131a provided in an arc shape can be disposed at an appropriate position between the forming plates 121 in a plan view.

In addition to adjusting the posture of the support plate 131, the angle of each pressing plate 111 (each pressing surface 111b) with respect to a straight line along the width direction Dw is adjusted as necessary (that is, the angle ψ is adjusted as necessary).

At least one of the angle ψ, the angle φ, and the angle θ described above is determined by at least one of the angle α1, the angle α2, and the angle β that are to be set in the forming article 300.

Details will be described later.

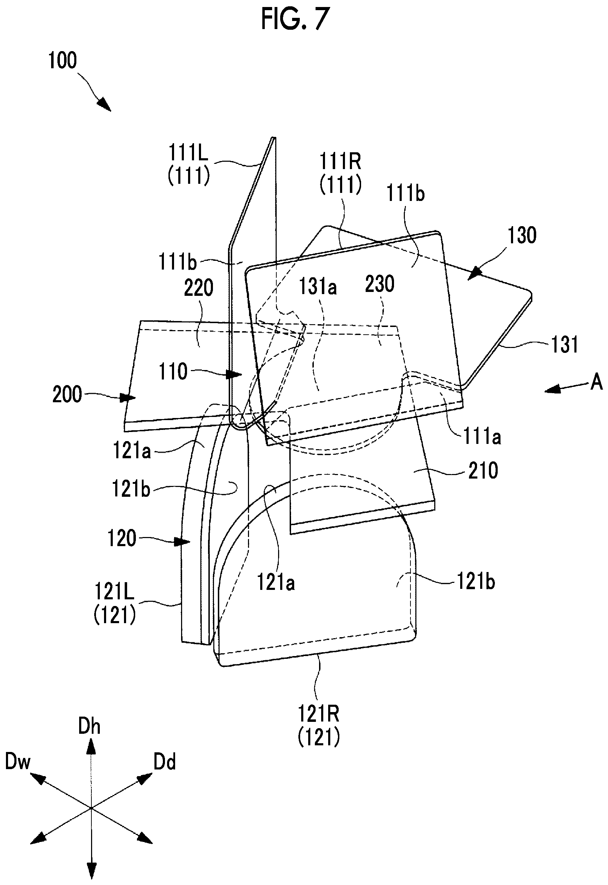

Next, as shown in Fig. 7, the pressing plate 111 of the pressing mechanism 110 is moved downward in the height direction Dh to bring the pressing contact part 111a of the pressing plate 111 into contact with the front surface of the laminate 200.

At this time, the intersection angle of the folding line 201 of the laminate 200 is determined by the angle β to be set in the forming article 300, and is substantially the same as the angle of the V shape formed by the pressing contact parts 111a of the two pressing plates 111 for which the angle ψ is set (to be precise, the angle ψ of each pressing plate 111 is set in accordance with the intersection angle of the folding line 201 of the laminate 200 set in accordance with the angle β of the forming article 300).

The posture of each of the pressing plates 111 may be adjusted in accordance with the rotation of the support plate 131 and the laminate 200 around the axis Cw and/or the axis Ch so that the pressing contact part 111a of the pressing plate 111 reliably comes into contact with the laminate 200 along the folding line 201. The posture of the forming plate 121 may be adjusted such that the forming surface 121b appropriately faces the pressing surface 111b of the pressing plate 111 whose posture has been adjusted.

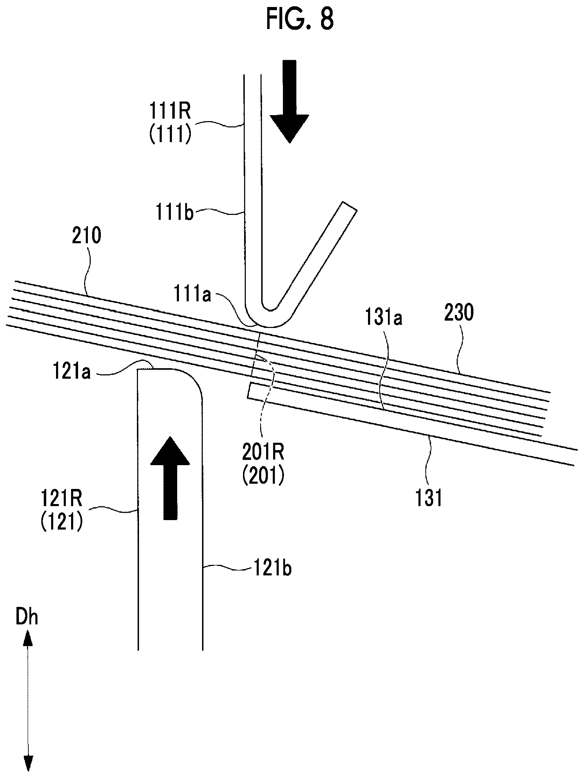

Next, as shown in Fig. 8, the forming plate 121 of the forming mechanism 120 is moved upward in the height direction Dh, and the forming contact part 121a of the forming plate 121 is brought into contact with the back surface of the laminate 200.

At this time, as shown in Fig. 7, since the forming contact part 121a has an arc shape, even in a case where the laminate 200 rotates around the axis Cw, the forming contact part 121a can be brought into contact with a position close to the center of the extending portions 210 and 220 in the depth direction Dd. In a case where the forming contact part 121a has a linear shape, when the laminate 200 rotates around the axis Cw, the forming contact part 121a may come into contact with the edge portions of the extending portions 210 and 220 first, and the extending portions 210 and 220 may not be folded along the assumed folding line 201.

Next, as shown in Fig. 9, the forming plate 121 of the forming mechanism 120 is further moved upward in the height direction Dh, and/or the pressing plate 111 of the pressing mechanism 110 is further moved downward in the height direction Dh, so that the extending portion 210 of the laminate 200 is folded along the folding line 201R with respect to the central portion 230, and the extending portion 220 is folded along the folding line 201L with respect to the central portion 230.

At this time, the extending portions 210 and 220 of the laminate 200 folded upward to be bounced up are sandwiched between the respective pressing plates 111 (pressing surfaces 111b) of the pressing mechanism 110 and the forming plate 121 (forming surface 121b) of the forming mechanism 120.

Thereafter, for example, the temperature of the forming plate 121 and/or the pressing plate 111 is raised and the forming plate 121 and/or the pressing plate 111 are heated by using an electric heater or the like, so that the interlayer of the laminate 200 in the portion sandwiched between the forming plate 121 and the pressing plate 111 is bonded.

After the above-described steps, the laminate 200 is formed into the forming article 300.

<About Angle $\psi$, Angle $\varphi$, and Angle $\theta$>

The angle $\psi$, the angle $\varphi$, and the angle $\theta$ are determined by a known angle $\alpha 1$, a known angle $\alpha 2$, and a known angle $\beta$ which are set in the forming article 300.

Hereinafter, details thereof will be described.

<<About Angle $\psi$>>

The angle $\psi$ is determined by the following Equation 1.

[Equation 1]

$$\psi = 90° - \frac{\beta}{2}$$

<<About Angle $\varphi$ and Angle $\theta$>>

In a case where $\alpha 1 = \alpha 2 = 90$ degrees, the angle $\varphi$ and the angle $\theta$ are determined by the following Equation 2.

[Equation 2]

$$\phi = \theta = 0$$

In a case where $\alpha 1 = 90$ degrees and $\alpha 2 \neq 90$ degrees, the angle $\varphi$ and the angle $\theta$ are determined by the following Equation 3 and Equation 4.

[Equation 3]

$$\sin \phi = \frac{\cos \alpha_2}{\sin 2\psi}$$

[Equation 4]

$$\theta = \psi - 90°$$

In a case where $\alpha 1 \neq 90$ degrees and $\alpha 2 = 90$ degrees, the angle $\varphi$ and the angle $\theta$ are determined by the following Equation 5 and Equation 6.

[Equation 5]

$$\sin \phi = \frac{\cos \alpha_1}{\sin 2\psi}$$

[Equation 6]

$$\theta = 90° - \psi$$

In a case where $\alpha 1 \neq 90$ degrees and $\alpha 2 \neq 90$ degrees, the angle $\varphi$ and the angle $\theta$ are determined by the following Equation 7 and Equation 8 or Equation 9.

It is assumed that in Equation 8 and Equation 9, a case where the angle $\theta$ is equal to or larger than -90 degrees and equal to or smaller than 90 degrees is selected.

[Equation 7]

$$\sin \phi = \frac{\cos \alpha_2}{\cos(\psi + \theta)} = \frac{\cos \alpha_1}{\cos(\psi - \theta)}$$

[Equation 8]

$$\theta = \operatorname{atan}\left(\frac{\cos \alpha_1 - \cos \alpha_2 \cos 2\psi}{\cos \alpha_2 \sin 2\psi}\right) - \psi$$

[Equation 9]

$$\theta = -\operatorname{atan}\left(\frac{\cos \alpha_2 - \cos \alpha_1 \cos 2\psi}{\cos \alpha_1 \sin 2\psi}\right) + \psi$$

<Modification Examples>

In the above description, the pressing mechanism 110 has the two independent pressing plates 111L and 111R.

However, the pressing plates 111L and 111R may be integrated with each other or may be connected to each other by other components, for example. That is, the pressing mechanism 110 may have a portion that substantially performs the same function as the two pressing plates 111L and 111R.

The same applies to the forming plate 121 of the forming mechanism 120.

According to the forming device and the forming method according to the present embodiment, the following effects are obtained.

Since the pressing plate 111 of the pressing mechanism 110 has the pressing contact part 111a that comes into contact with the front surface of the laminate 200 along the folding line 201 and the pressing surface 111b in which the direction substantially perpendicular to the laminate 200 is the in-plane direction, and the forming plate 121 of the forming mechanism 120 has the forming contact part 121a that comes into contact with the back surface of the laminate 200 and the forming surface 121b facing the pressing surface 111b, the laminate 200 can be formed into the forming article 300 having the two folding parts 301 intersecting each other and the three surfaces 310, 320, and 330 by sandwiching the laminate 200 between the pressing surface 111b and the forming surface 121b while folding the laminate 200 with the pressing contact part 111a that comes into contact with the laminate 200 from the front surface and with the forming contact part 121a that comes into contact with the laminate 200 from the back surface.

Since the support plate 131 is disposed between the pressing plates 111 as viewed in the height direction Dh and is provided with the support surface 131a on which the laminate 200 is placed, the forming using the pressing plates 111 and the forming plates 121 can be performed in a state where the posture of the laminate 200 is stabilized.

Since the angle formed by the two pressing surfaces 111b is adjustable in the pressing mechanism 110, and the angle formed by the two forming surfaces 121b is adjustable in the forming mechanism 120, the angle $\beta$ formed by the two extending portions 210 and 220 of the laminate 200 can be changed.

Since the support plate 131 of the support mechanism 130 is rotatable around the axis Cw along the width direction Dw and/or is rotatable around the axis Ch along the height direction Dh, the angle $\alpha 1$ formed by the extending portion 210 and the central portion 230 of the laminate 200 and/or the angle $\alpha 2$ formed by the extending portion 220 and the central portion 230 of the laminate 200 can be changed.

Since the forming contact part 121a smoothly protrudes toward the pressing plate 111, even in a case where the laminate 200 is rotated by a predetermined angle around the axis Cw along the width direction Dw, the forming contact part 121a can be brought into contact with a position close to the center of the extending portions 210 and 220 of the laminate 200 in the depth direction Dd.

Since the edge of the support plate 131 of the support mechanism 130 that face the two forming plates 121 are provided in an arc shape, the support plate 131 can be formed without interfering with the two forming plates 121.

Since the position of the support plate 131 of the support mechanism 130 in the depth direction Dd is adjustable, the center of the support plate 131 provided in an arc shape can be disposed at an appropriate position between the forming plates 121.

The embodiment described above can be understood as follows, for example. A forming device (100) according to a first aspect of the present disclosure is a forming device for folding a laminate (200) of fiber-reinforced sheets along two folding lines (201L, 201R) intersecting each other, the forming device including a pressing mechanism (110) having two pressing plates (111), and a forming mechanism (120) having two forming plates (121), in which the pressing plate and the forming plate are capable of being brought close to and separated from each other in a first direction (Dh) intersecting the laminate, the pressing plate of the pressing mechanism has a pressing contact part (111a) that comes into contact with a front surface of the laminate along the folding line and a pressing surface (111b) in which a direction substantially perpendicular to the laminate is an in-plane direction, and the forming plate of the forming mechanism has a forming contact part (121a) that comes into contact with a back surface of the laminate and a forming surface (121b) facing the pressing surface.

According to the forming device of the present aspect, since the pressing plate and the forming plate can be brought close to and separated from each other in the first direction intersecting the laminate, the pressing plate of the pressing mechanism has the pressing contact part that comes into contact with the front surface of the laminate along the folding line and the pressing surface in which the direction substantially perpendicular to the laminate is the in-plane direction, and the forming plate of the forming mechanism has the forming contact part that comes into contact with the back surface of the laminate and the forming surface facing the pressing surface, the laminate can be formed into the forming article having the two folding parts intersecting each other and the three surfaces by sandwiching the laminate between the pressing surface and the forming surface while folding the laminate with the pressing contact part that comes into contact with the laminate from the front surface and with the forming contact part that comes into contact with the laminate from the back surface.

In the forming device according to a second aspect of the present disclosure, in the first aspect, a support mechanism (130) having a support plate (131) is provided, the support plate is disposed between the pressing plates as viewed in the first direction, and is provided with a support surface (131a) on which the laminate is placed.

According to the forming device of the present aspect, since the support plate is disposed between the pressing plates as viewed in the first direction and is provided with a support surface on which the laminate is placed, the forming using the pressing plates and the forming plate can be performed in a state where the posture of the laminate is stabilized.

In the forming device according to a third aspect of the present disclosure, in the first aspect or the second aspect, an angle formed by the two pressing surfaces is adjustable in the pressing mechanism, and an angle formed by the two forming surfaces is adjustable in the forming mechanism.

According to the forming device of the present aspect, since the angle formed by the two pressing surfaces is adjustable in the pressing mechanism, and the angle formed by the two forming surfaces is adjustable in the forming mechanism, the angle formed by the two portions of the laminate, which are interposed between the pressing surface and the forming surface facing the pressing surface can be changed.

In the forming device according to a fourth aspect of the present disclosure, in the second aspect, when a direction that is substantially perpendicular to the first direction and passes through a middle between the two pressing surfaces is defined as a second direction (Dd) and a direction that is substantially perpendicular to the first direction and the second direction is defined as a third direction (Dw), the support plate of the support mechanism is rotatable around an axis (Cw) along the third direction and/or is rotatable around an axis (Ch) along the first direction.

According to the forming device of the present aspect, since the support plate of the support mechanism is rotatable around the axis along the third direction and/or is rotatable around the axis along the first direction, the angle formed by the portion of the laminate interposed between the pressing surface and the forming surface facing the pressing surface and the portion of the laminate installed on the support surface can be changed.

In the forming device according to a fifth aspect of the present disclosure, in the fourth aspect, the forming contact part smoothly protrudes toward the pressing plate.

According to the forming device of the present aspect, since the forming contact part smoothly protrudes toward the pressing plate, even in a case where the laminate is rotated by a predetermined angle around the axis along the third direction, the forming contact part can be brought into contact with a position close to the center of the laminate.

In the forming device according to the sixth aspect of the present disclosure, in the fourth aspect or the fifth aspect, an edge of the support plate of the support mechanism, which faces the two forming plates, is provided in an arc shape.

According to the forming device of the present aspect, since the edge of the support plate of the support mechanism, which faces the two forming plates, is provided in an arc shape, the support plate can be formed without interfering with the two forming plates.

In the forming device according to a seventh aspect of the present disclosure, in the sixth aspect, a position of the support plate of the support mechanism in the second direction is adjustable.

According to the forming device of the present aspect, since the position of the support plate of the support mechanism in the second direction is adjustable, the center of the support plate provided in an arc shape can be disposed at an appropriate position between the formings.

A forming method according to an eighth aspect of the present disclosure is a forming method using the forming device according to second aspect, the forming method including: bonding interlayers of a predetermined portion of the laminate placed on the support surface; placing the predetermined portion of the laminate, of which the interlayers are bonded, on the support surface of the support plate disposed between the pressing plate and the forming plate in the first direction; and bringing the pressing plate and the forming plate close to each other in the first direction.

Reference Signs List

100: forming device
110: pressing mechanism
111 (111L, 111R): pressing plate
111a: pressing contact part
111b: pressing surface
120: forming mechanism
121 (121L, 121R): forming plate
121a: forming contact part
121b: forming surface
130: support mechanism
131: support plate
131a: support surface
200: laminate
201 (201L, 201R): folding line
210: extending portion
220: extending portion
230: central portion
300: forming article
301 (301L, 301R): folding part
310: surface
320: surface
330: surface
Dh: height direction (first direction)
Dd: depth direction (second direction)
Dw: width direction (third direction)
Ch: axis along height direction

Cw: axis along width direction

**Claims**

1. A forming device for folding a laminate of fiber-reinforced sheets along two folding lines intersecting each other, the forming device comprising:

   a pressing mechanism having two pressing plates; and
   a forming mechanism having two forming plates,
   wherein the pressing plate and the forming plate are capable of being brought close to and separated from each other in a first direction intersecting the laminate,
   the pressing plate of the pressing mechanism has a pressing contact part that comes into contact with a front surface of the laminate along the folding line and a pressing surface in which a direction substantially perpendicular to the laminate is an in-plane direction, and
   the forming plate of the forming mechanism has a forming contact part that comes into contact with a back surface of the laminate and a forming surface facing the pressing surface.

2. The forming device according to claim 1, further comprising:

   a support mechanism having a support plate,
   wherein the support plate is disposed between the pressing plates as viewed in the first direction, and is provided with a support surface on which the laminate is placed.

3. The forming device according to claim 1,

   wherein an angle formed by the two pressing surfaces is adjustable in the pressing mechanism, and
   an angle formed by the two forming surfaces is adjustable in the forming mechanism.

4. The forming device according to claim 2,

   wherein when a direction that is substantially perpendicular to the first direction and passes through a middle between the two pressing surfaces is defined as a second direction, and a direction that is substantially perpendicular to the first direction and extends in the in-plane direction of the support plate of the support mechanism is defined as a third direction,
   the support plate of the support mechanism is rotatable around an axis along the third direction, and/or is rotatable around an axis along the first direction.

5. The forming device according to claim 4,
   wherein the forming contact part smoothly protrudes toward the pressing plate.

6. The forming device according to claim 4,
   wherein an edge of the support plate of the support mechanism, which faces the two forming plates, is formed in an arc shape.

7. The forming device according to claim 6,
   wherein a position of the support plate of the support mechanism in the second direction is adjustable.

8. A forming method using the forming device according to claim 2, the forming method comprising:

   bonding interlayers of a predetermined portion of the laminate placed on the support surface;
   placing the predetermined portion of the laminate, of which the interlayers are bonded, on the support surface of the support plate disposed between the pressing plate and the forming plate in the first direction; and
   bringing the pressing plate and the forming plate close to each other in the first direction.

# FIG. 1

FIG. 2

## FIG. 3

## FIG. 4

# FIG. 5

# FIG. 6

# FIG. 7

# FIG. 8

# FIG. 9

310

121a

111b

121R
(121)

111a

111R
(111)

121b

131a    330

301R
(301)

131

Dh

## INTERNATIONAL SEARCH REPORT

| International application No. |
|---|
| **PCT/JP2023/025717** |

| A. | CLASSIFICATION OF SUBJECT MATTER |
|---|---|

*B29C 53/04*(2006.01)i; *B29C 43/34*(2006.01)i; *B29C 43/36*(2006.01)i; *B29C 70/42*(2006.01)i
FI:    B29C53/04; B29C43/34; B29C70/42; B29C43/36

According to International Patent Classification (IPC) or to both national classification and IPC

| B. | FIELDS SEARCHED |
|---|---|

Minimum documentation searched (classification system followed by classification symbols)

B29C53/04; B29C43/34; B29C43/36; B29C70/42

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2020-146863 A (SEKISUI PLASTICS CO., LTD.) 17 September 2020 (2020-09-17) entire text, all drawings | 1-8 |
| A | WO 2019/031478 A1 (TORAY INDUSTRIES, INC.) 14 February 2019 (2019-02-14) entire text, all drawings | 1-8 |
| A | JP 2013-505151 A (HEXCEL CORPORATION) 14 February 2013 (2013-02-14) entire text, all drawings | 1-8 |
| A | JP 2019-209572 A (TOYOTA JIDOSHA KABUSHIKI KAISHA) 12 December 2019 (2019-12-12) entire text, all drawings | 1-8 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 August 2023** | **15 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/025717**

| Patent document cited in search report | | | Publication date (day/month/year) | Patent family member(s) | | | Publication date (day/month/year) |
|---|---|---|---|---|---|---|---|
| JP | 2020-146863 | A | 17 September 2020 | (Family: none) | | | |
| WO | 2019/031478 | A1 | 14 February 2019 | (Family: none) | | | |
| JP | 2013-505151 | A | 14 February 2013 | US | 2011/0064908 | A1 | |
| | | | | entire text, all drawings | | | |
| | | | | CN | 102548741 | A | |
| JP | 2019-209572 | A | 12 December 2019 | US | 2019/0366654 | A1 | |
| | | | | entire text, all drawings | | | |
| | | | | EP | 3584055 | A1 | |
| | | | | CN | 110549650 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 9718262 B